Europäisches Patentamt

European Patent Office

Office européen des brevets

(19)

(11) Publication number: **0 042 903**
**B1**

# (12) EUROPEAN PATENT SPECIFICATION

(45) Date of publication of patent specification: **05.12.84**

(51) Int. Cl.³: **B 06 B 1/02**

(21) Application number: **81100535.4**

(22) Date of filing: **26.01.81**

(54) Apparatus for homogenizing a fluid flowing through a duct by means of ultrasonic waves.

(30) Priority: **30.06.80 IT 2310080**

(43) Date of publication of application:
**06.01.82 Bulletin 82/01**

(45) Publication of the grant of the patent:
**05.12.84 Bulletin 84/49**

(84) Designated Contracting States:
**BE CH DE FR GB LI NL SE**

(56) References cited:
**US-A-3 885 902**
**US-A-3 931 533**
**US-A-4 135 387**

**CONTROL & INSTRUMENTATION, vol. 12,
1980, February no. 2, London, GB, "Coherent
modulation applied to ultrasonic measurement
systems", pages 43-44**

(73) Proprietor: **Vota, Mario Francesco**
**Viale Lombardia, 188**
**I-20047 Brugherio (Province of Milano) (IT)**

(72) Inventor: **Vota, Mario Francesco**
**Viale Lombardia, 188**
**I-20047 Brugherio (Province of Milano) (IT)**

(74) Representative: **Modiano, Guido et al**
**MODIANO & ASSOCIATI S.A.S. Via Meravigli, 16**
**I-20123 Milan (IT)**

Courier Press, Leamington Spa, England.

## Description

This invention relates to an apparatus for homogenizing a fluid flowing through a duct by means of ultrasonic waves.

This apparatus is used in treatment processes of fluids consisting of several chemical components, when in an industrial process it is necessary to achieve saturation conditions the closest to the stoichiometric conditions, at the end of the process. As an example of applications hereto, the following processes may be mentioned which involve:

the use of industrial paints by means of robots, the blend between additives and lubrificant oils, the manifold blendings of fluids in petroleum, petrochemical, chemical fields and food industry, the industrial waters treatments, the combustion, the drying of several materials.

It is well known that ultrasonic waves are applied in the industrial field as well as in the scientific field. We quote from known publications:

On page 240 from the book "La Combustione" by Prof. Guiliano Salvi, Tamburini Editore, Milan, issued on 1968, there is described the atomiser of Mr. J. G. Martner, which makes use of a piezoelectric disc connected with an aluminum device, to atomize light liquid fuels up to kerosene;

from page 179 to page 191 of the review "la Termotecnica", Vol. XXVII n. 4, year 1973, the authour Prof. Giovanni Vulpetti illustrates the "Experimental analysis for temperature measurements with sound speed in a supersonic gas flux".

The apparatus of the present invention is intended to perform the treatment of fluids consisting of several components, flowing inside a duct, with the purpose of making them homogeneous.

A fluid constituted by several components, which have different densities, when submitted to a translation action inside a duct, causes several known phenomena:

the concentration of the heaviest particles of the fluid in position of minimum disturbance and friction, that is in the center of the fluid vein;

the projection of the heaviest particles, by centrifugal force, whenever the duct compels the fluid flux to change its direction;

the accumulation of said particles in dead areas in the duct or inside the vessel, whenever the fluid decreases its velocity;

the alteration of the aggregation status between the components which constitute the fluid at the end of its transportation inside the duct at the very moment of the start of the reaction, in one of manifold industrial processes.

Till the present time, apparatuses are known which use ultrasonic waves for fluid treatments by various means.

Fluids are placed in closed vessels to be treated, and equipments are employed which use manual and easily adjustable frequency ranges. By this means it is possible to treat small quantities of fluids and the system cannot be inserted in a continuous process.

Apparatuses are also known which use ultrasonic waves to treat moving fluids in plants where the constancy of the values of temperature, viscosity and velocity of said fluids is assured. Those apparatuses need manual adjustment when the process starts. Then, whenever the physical parameters of the fluid change, the technician in charge must adjust again the operating frequency of the apparatus.

In some cases a limited grade of system self-governing has been obtained by means of thermostats, viscosimeters and measure metering flanges. Those accessories give slow responses which need to be transformed into signals suitable for the self-governing set of the ultrasonic waves generator. This double delay produces only a partial treatment of the fluid. Moreover, it is known that a conveyed fluid presents variations in physical parameters, often in contraposition between themselves. In such a case the signals translator becomes critical and does not perform its adjusting task. At this time one or more technicians must step in to reset the whole treatment system.

From US—A—4 135 387 there is known an apparatus for monitoring the phase proportions of a single component fluid by determining the acoustic velocity thereof. Such an apparatus comprises a first acoustic wave generator for generating an homogenizing wave beam in the fluid and a second acoustic wave generator, arranged downstream of the first generator, for passing acoustic signals through the fluid. The acoustic signals are detected by a corresponding receiver which also times the traversal of the signals and in this way enables the determination of the acoustic velocity. Such an apparatus is however not able to evaluate the homogenization level of the fluid and therefore to control the first generator frequency accordingly, and further presents interference problems between the two generators. In fact, in real systems, two generators never have exactly the same frequency and therefore continue to interact, so that the results furnished by the receiver are not always reliable.

Accordingly the aim of this invention is to eliminate the drawbacks of the prior art systems by providing an apparatus for homogenizing a fluid flowing through a duct by means of ultrasonic waves which operates in a reliable and simple manner ensuring a real time adjusting response to changes in the parameters of the fluid being treated.

This aim is achieved through the features described in Claim 1.

The generator of ultrasonic waves cooperates with the receiver by elaborating the signals coming from the latter so as to adjust its own emission in real time; this has the purpose of instantaneously generating the most suitable frequencies for the homogenization treatment of the fluid arriving in the duct, since the fluid needs an immediate adjustment of the treatment frequency in real time, whenever the flow rate or the viscosity of the fluid changes.

An apparatus according to the invention, when applied to those industrial processes which use conveyed fluids having changeable values of viscosity and flow rate, gives surprising fluid homogenization in nearly newtonian conditions with very good stoichiometric results thanks to the accurate and continuous adjustment of the frequencies in real time.

Furthermore with an apparatus according to the invention it is possible to treat a large quantity of fluids, to ensure a very high efficiency of the treatment in a completely self-governing manner, after the first and sole initial set up, when the apparatus is installed.

These advantages come from the invention by having combined in a unique system the double function of treatment and self-rectifying of the generator, by means of a continuous detection which compares itself with prefixed parameters, without the presence of operators.

The combination in a unique and highly reliable system of said functions allows to obtain qualitative and quantitative results which were not possible to obtain with the prior art.

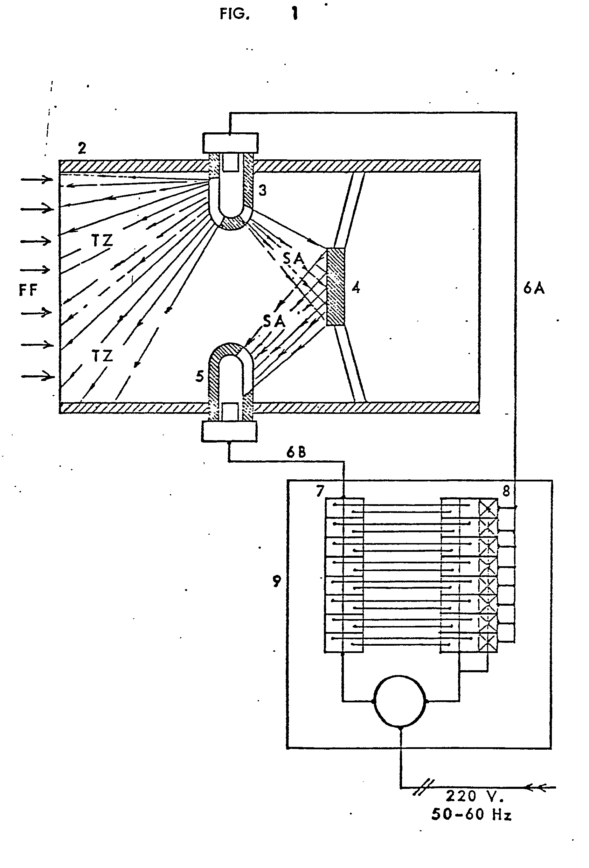

In Figure 1, FF indicates the direction of fluid flux to be treated inside a duct 2. The apparatus 9 is a generator of ultrasonic waves on different ranges of frequency, ranges chosen among those suitable to the fluid to be treated.

The apparatus is preferably fed by means of single-phase electric energy at low voltage 220 V, 50 or 60 Hz.

The electric current suitable to produce the ultrasonic waves is generated by an oscillator 8, made of quartz crystals, condensers, resistances, thyristors, semiconductors and connections, fit to generate currents with manifold frequencies according with the needs, provided that to different parameters of velocity and viscosity of the fluid to be treated, there correspond different optimal treatment frequencies.

The cables 6A—6B are each made by a conductor of suitable section, having constant ohmic features and a coaxial shield, and being placed in a metallic duct. The cable 6A connects the generator 8 with a transducer 3 which has around it a bulb consisting of a single body with two openings preset to emit a first and a separate second beam of directed ultrasonic waves. The task of the waves affecting a treating zone TZ is to treat the arriving fluid by dispersing the molecules of elements in uniform way inside the whole fluid, which thus undergoes a homogenizing action and assumes a constant viscosity in all the points of its flux.

Prospective changes in parameters of velocity or viscocity in the arriving fluid, are shown as alterations of the perfect homogeneousness before obtained. Those alterations are signalled by waves which cross a portion of the treated fluid in a zone SA downstream of the treating zone TZ. A shield 4 arranged in the path of the second beam reflects the second beam towards a receiver 5 which through the cable 6B sends the detected signal to a signal analyser 7.

Having started the correct treatment of the fluid by means of waves in zone TZ, with constant fluid conditions of velocity and viscosity, waves in zone SA cross a portion of fluid facing a constant resistance to their passage and to their refraction. The signal from the receiver 5 to the analyser 7 results constant and regular and this constant condition keeps a well-balanced situation into the system interacting between analyser 7 and generator 8, so that the last goes on generating current at the same frequency.

In case of alterations in viscosity and/or velocity or flow rate values of the arriving fluid, it is necessary to change the frequency of waves in zone TZ, thus it is necessary to change the frequency of these waves when homogeneousness conditions result altered.

Those alterations in the stauts of fluid are detected by waves in zone SA which do not face anymore a constant resistance to their crossing, and the scanning made by receiver 5 presents discontinuities in signals, discontinuities which may be eventually scanned with a cathode ray oscilloscope.

Analyser 7 also includes a binary circuit system, which detects any discontinuities in the received signal and on the basis of the absence or presence of discontinuities in the received signal, accepts or rejects it; accepting it, means that the frequency of the generator 8 is that suitable to go on with the treatment of arriving fluid.

Analyser 7 blocks arriving signals which present irregularities or distortions, activating another crystal and related circuit with higher frequency, following on this way, until the operating frequency meets the optimal value in TZ zone. This is the case in which it is necessary to raise the operating frequency generated by the generator 8 because of the raised aggregation status of arriving elements into the fluid, or of the increased velocity of flux. In case of decreased velocity and/or viscosity of arriving fluid, it will be necessary to decrease the frequency of TZ zone waves, i.e. the frequency of the generator 8. In other words, the signals from the receiver 5 control the frequency of the ultrasonic waves in dependence of the viscosity and the velocity or flow rate of the treated fluid so that the frequency most suitable for homogenizing is reached.

The beam of SA zone waves meeting a decreased resistance in crossing the fluid, takes an incidence angle which gets away from shield 4 downwards so that the beam of reflected waves to receiver 5 results more sharpened, that is SA zone signal flexes so much downwards that instead of reflecting on shield 4 is scattered in the front area of said disc.

In these conditions of poor or null reflection, signals detected by receiver 5 are not sufficient to maintain well-balanced the system interacting between analyser 7 and generator 8, so that the analyser 7 puts into operation a crystal and related circuit having lower frequency characteristic, till to stop emissions from generator 8 in case of stopped flux of fluid.

Obviously, when the aggregation status or viscosity of the components of the fluid or the flow rate thereof is greater, as already stated above, the resistance met by the beam crossing the fluid in zone SA is greater and the beam takes a smaller incidence and reflection angle relative to the shield 4.

The elapsed time between generated-issued-received-analyzed-rectified-generated etc signals is very short, so that the fluid is treated in real time, according to its immediate exigencies.

## Claims

1. Apparatus for treating and homogenizing a fluid flowing through a duct (2) by means of ultrasonic waves, the fluid consisting of several components, comprising a generator (8) and a transducer (3) for generating a first beam of ultrasonic waves in the fluid, the first beam being directed to a treating zone (TZ) where it performs the homogenizing action, and means for generating a separate, second beam of ultrasonic waves directed to a zone (SA) downstream of the treating zone (TZ) onto a receiver (5) for detecting and measuring the waves passed through the fluid, characterized in that the transducer (3) emits both the first beam and the second beam, the transducer (3) having around it a bulb consisting of a single body with two openings for defining the two beams, and in that the signals from the receiver (5) control the frequency of the ultrasonic waves in dependence on the viscosity and the flow rate of the treated fluid so that the frequency most suitable for homogenizing is reached.

2. Apparatus according to Claim 1, characterized in that it comprises a shield (4) arranged in the path of said second beam and reflecting said second beam towards said receiver (5), the incidence and reflection angles of said second beam varying in accordance with the flow rate and/or viscosity of the fluid due to the different resistance met by said second beam in crossing the fluid.

3. Apparatus according to Claims 1 and 2, characterized in that it comprises a signal analyser (7) receiving the signal detected by said receiver (5) through a cable (6B) and including a binary circuit system which detects any discontinuities in the received signal and, in accordance with the absence or presence of said discontinuities, accepts or rejects the signal, maintaining or changing the frequency of the signal emitted by the generator (8).

## Patentansprüche

1. Apparat zur Behandlung und Homogenisierung eines durch eine Leitung (2) strömenden, aus mehreren Komponenten bestehenden Fluids mittels Ultraschallwellen, bestehend aus einem Generator (8) und einem Wandler (3) zur Erzeugung eines ersten Strahlenbündels von Ultraschallwellen im Fluid, wobei das erste Strahlenbündel auf eine Behandlungszone (TZ) gerichtet ist, wo es die Homogenisierung bewirkt, und aus Einrichtungen zur Erzeugung eines separaten zweiten Strahlenbündels von Ultraschallwellen, das auf eine Zone (SA) hinter der Zone (TZ) auf einen Empfänger (5) gerichtet ist, um die durch das Fluid hindurchgetretenen Wellen zu empfangen und zu messen, dadurch gekennzeichnet, daß der Wandler (3) sowohl das erste als auch das zweite Strahlenbündel aussendet und von einem aus einem einzigen Körper bestehenden Kolben mit zwei Öffnungen zur Begrenzung der beiden Strahlenbündel umgeben ist, und daß die Signale vom Empfänger (5) die Frequenz der Ultraschallwellen in Abhängigkeit von der Viskosität und der Strömungsgeschwindigkeit des der Behandlung unterworfenen Fluids zwecks Erzielung der für die Homogenisierung geeignetsten Frequenz steuern.

2. Apparat nach Anspruch 1, dadurch gekennzeichnet, daß er ein Schild (4) aufweist, das im Weg des zweiten Strahlenbündels angeordnet ist und das zweite Strahlenbündel gegen den Empfänger (5) hin reflektiert, wobei der Einfallswinkel und der Reflexionswinkel des zweiten Strahlenbündels in Übereinstimmung mit der Strömungsgeschwindigkeit und/oder der Viskosität des Fluids auf Grund des verschiedenen Widerstandes, auf den das Strahlenbündel beim Durchqueren des Fluids trifft, variieren.

3. Apparat nach den Ansprüchen 1 und 2, dadurch gekennzeichnet, daß er einen Signalanalysator (7) aufweist, der das vom Empfänger (5) aufgenommene Signal über ein Kabel (6B) empfängt und ein binäres Schaltkreissystem enthält, welches jede Diskontinuität im empfangene Signal ermittelt und in Übereinstimmung mit der Abwesenheit oder Gegenwart solcher Diskontinuitäten das Signal annimmt oder zurückweist, indem es die vom Generator (8) abgegebene Frequenz beibehält oder ändert.

## Revendications

1. Appareil pour traiter en homogénéiser un fluide circulant à travers un conduit (2) au moyen d'ondes ultrasonores, le fluide étant constitué de plusieurs composants, comprenant un générateur (8) et un transducteur (3) pour engendrer un premier faisceau d'ondes ultrasonores dans le fluide, le premier faisceau étant dirigé sur une zone à traiter (TZ) où il procure une action d'homogénéisation et des moyens pour engendrer un second faisceau séparé d'ondes ultrasonores dirigé vers une zone (SA) en aval de la zone de traitement (TZ) sur un récepteur (5) pour détecter et mesurer les ondes passant à travers le fluide, caractérisé en ce que le transducteur (3) émet à la fois le premier faisceau et le second faisceau, le transducteur (3) ayant autour de lui un bulbe composé d'un corps unique avec deux ouvertures pour définir les deux faisceaux, et en ce que les signaux provenant du récepteur (5) commandent la fréquence des ondes ultrasonores en fonction de la viscosité et du débit du fluide traité de façon à obtenir une fréquence le plus appropriée à l'homogénéisation.

2. Appareil selon la revendication 1, caractérisé en ce qu'il comporte un écran (4) agencé sur le trajet dudit second faisceau et réfléchissant ledit second faisceau en direction dudit récepteur (5), les angles d'incidence et de réflexion dudit second faisceau variant en fonction du débit et/ou de la viscosité du fluide à cause de la résistance différente rencontrée par ledit second faisceau en traversant ledit fluide.

3. Appareil selon les revendications 1 et 2, caractérisé en ce qu'il comporte un analyseur de signal (7) recevant le signal détecté par ledit récepteur (5) à travers un câble (6B) et comprenant un système binaire qui détecte toute discontinuité dans le signal reçu et, en fonction de l'absence ou de la présence de telle discontinuité, accepte ou rejette le signal, en maintenant ou en changeant le fréquence dudit signal émis par le générateur (8).

FIG. 1